# EUROPÄISCHE PATENTSCHRIFT

(11) **EP 1 487 908 B1**
(45) Veröffentlichungstag und Bekanntmachung des Hinweises auf die Patenterteilung: **22.02.2006**
(21) Anmeldenummer: 03744839.6
(22) Anmeldetag: 21.03.2003
(51) Int. Cl.: C08J 7/04, C08J 7/16, B32B 17/10, B32B 27/00, B32B 27/20, B32B 27/30, B32B 27/38

(54) **KUNSTSTOFFFOLIE MIT MEHRSCHICHT-INTERFERENZBESCHICHTUNG**
PLASTIC FILM WITH A MULTILAYERED INTERFERENCE COATING
FEUILLE EN MATIERE PLASTIQUE A REVETEMENT D'INTERFERENCE MULTICOUCHE

(30) Priorität: 22.03.2002 DE 10212961
(43) Veröffentlichungstag der Anmeldung: 22.12.2004
(73) Patentinhaber: Leibniz-Institut für Neue Materialien gemeinnützige GmbH, 66123 Saarbrücken (DE)
(72) Erfinder: BERNI, Anette, 66894 Käshofen (DE); MENNIG, Martin, 66287 Quierschied (DE); OLIVEIRA, Peter, W., 66111 Saarbrücken (DE); SCHMIDT, Helmut, 66130 Saarbrücken-Güdingen (DE)
(74) Vertreter: Barz, Peter
(86) Internationale Anmeldenummer: PCT/EP2003/002988
(87) Internationale Veröffentlichungsnummer: WO 2003/080718

(56) Entgegenhaltungen:
- DE-A- 19 952 040
- PATENT ABSTRACTS OF JAPAN vol. 1996, no. 05, 31. Mai 1996 (1996-05-31) & JP 08 012902 A (CATALYSTS & CHEM IND CO LTD), 16. Januar 1996 (1996-01-16)
- DATABASE WPI Derwent Publications Ltd., London, GB; AN 1975-40282W XP002240374 & JP 50 013317 B (NIPPON SYNTH PAPER), 19. Mai 1975 (1975-05-19)

## Beschreibung

Die Erfindung betrifft eine Kunststofffolie mit einem darauf aufgebrachten lnterferenz-Mehrschichtsystem, ein Verfahren zur Herstellung dieser Kunststofffolie, ein Verbundmaterial aus einem Substrat und einer auflaminierten Kunststofffolie mit Interferenz-Mehrschichtsystem und Verwendungen dieser Kunststofffolie oder dieses Verbundmaterials.

Folien aus Kunststoff, die einseitig Interferenzschichtpakete tragen, werden z.B. für spezielle Filter oder für bestimmte optische Anwendungen in der Architektur oder im Fahrzeugbau, insbesondere für spezielle Verscheibungen, benötigt, wo sie als Entspiegelungs-, NIR-Reflexions-, IR-Reflexions- oder Farbfilterschichten dienen können. Die Kunststofffolien mit den lnterferenzschichtpaketen werden z. B. auf massive Scheiben aus Glas oder Kunststoff laminiert. Aus dem Stand der Technik bekannte Interferenzschichtpakete aus hoch- und niedrigbrechenden optischen Schichten (λ/4-Schichten) werden über Vakuum-Beschichtungsverfahren (Sputtern) abgeschieden. Dabei können aber nur geringe Abscheidungsräten realisiert werden, so dass die Folien entsprechend teuer sind. Durch das Sputterverfahren können nur rein anorganische Schichten aufgebracht werden.

Aus dem Stand der Technik sind auch nasschemische Beschichtungen nach dem Sol-Gel-Verfahren bekannt. Allerdings konnten diese Beschichtungen bisher nicht auf flexible Kunststofffolien aufgebracht werden, sondern nur auf starre bzw. massive Glassubstrate, wie Flachglas und Brillenglas, oder Kunststoffsubstrate wie Polycarbonat-Scheiben. Zur Beschichtung der starren Substrate wurden Tauch- oder Schleuderbeschichtungsverfahren verwendet, die sich aber nicht zur Beschichtung von flexiblen Folien eignen.

Weiterhin ist bekannt, dass flexible Kunststofffolien über nasschemische Verfahren mit anderen funktionellen Beschichtungen versehen werden können, z. B. zur Herstellung von Magnetbändern für Audio- oder Videokassetten, Tintenstrahl-Overheadfolien oder Folien zur Oberflächendekoration mittels Heißprägen. Hierfür werden Folienbeschichtungsverfahren eingesetzt, beispielsweise das Messer-Gießen (Rakelmesser-Streichverfahren), Beschichten mit Schlitzdüse (Slot-Coating), Kiss-Coating mit Spiratschaber, Meniskus-Beschichten, Walzenbeschichten oder Umkehrwalzenbeschichten (Reverse-Roll-Coating). Die Herstellung optischer Interferenz-Mehrschichtsysteme auf Folien ist mit diesen nasschemischen Beschichtungsverfahren aber nicht bekannt.

Aufgabe der Erfindung war es, ein einfaches Verfahren zur Herstellung von optischen Interferenz-Mehrschichtsystemen auf Kunststofffolien und entsprechende Erzeugnisse bereitzustellen, ohne dass aufwendige und damit kostspielige Vakuum-Beschichtungsverfahren erforderlich sind.

Gegenstand der Erfindung ist eine Kunststofffolie mit einem darauf aufgebrachten optischen Interferenz-Mehrschichtsystem umfassend mindestens zwei Schichten mit unterschiedlichen Brechungsindices, die jeweils erhältlich sind durch Vernetzung einer Beschichtungszusammensetzung, die nanoskatige anorganische Feststoffteilchen mit polymerisierbaren und/oder polykondensierbaren organischen Oberflächengruppen enthält, unter Bildung einer über die polymerisierbaren und/oder polykondensierbaren organischen Oberflächengruppen vernetzten Schicht. Bei den erhaltenen Schichten handelt es sich jeweils um organisch modifizierte anorganische Schichten.

Gegenstand der Erfindung ist ferner ein Verfahren zur Herstellung dieser Kunststofffolie mit Mehrschicht-Interferenzbeschichtung mit mindestens zwei Schichten mit unterschiedlichen Brechungsindices, das folgende Stufen umfaßt:
a) Aufbringen eines Beschichtungssols, das nanoskalige anorganische Feststoffteilchen mit polymerisierbaren und/oder polykondensierbaren organischen Oberflächengruppen enthält, auf die Kunststofffolie,
b) Vernetzung der polymerisierbaren und/oder polykondensierbaren organischen Oberflächengruppen der Feststoffteilchen unter Bildung einer zumindest teilweise organisch vernetzten Schicht,
c) Aufbringen eines weiteren Beschichtungssols, das nanoskalige anorganische Feststoffteilchen mit polymerisierbaren und/oder polykondensierbaren organischen Oberflächengruppen enthält und einen anderen Brechungsindex als das vorangehende Beschichtungssol ergibt, auf die zumindest teilweise organisch vernetzte Schicht,
d) Vernetzung der polymerisierbaren und/oder polykondensierbaren organischen Oberflächengruppen der Feststoffteilchen unter Bildung einer weiteren, zumindest teilweise organisch vernetzten Schicht,
e) gegebenenfalls ein- oder mehrmaliges Wiederholen der Schritte c) und d) unter Bildung weiterer zumindest teilweise organisch vernetzter Schichten, und
f) gegebenenfalls Wärmebehandlung des Schichtverbunds, wobei dieser Schritt zusammen mit dem Schritt d) für die oberste Schicht ausgeführt werden kann.

Ein Interferenz-Mehrschichtsystem besteht aus mindestens zwei Schichten aus Materialien mit unterschiedlichen Brechungsindices (Brechzahlen). An den Trennflächen zwischen den Schichten wird jeweils ein Teil des einfallenden Lichts reflektiert. Je nach Material und Dicke der Schichten löschen sich die Reflexe aus (negative Interferenz) oder verstärken sich (positive Interferenz).

Überraschenderweise hat sich gezeigt, dass mit der erfindungsgemäß eingesetzten Beschichtungszusammensetzung Kunststofffolien in einem nasschemischen Folienbeschichtungsverfahren mit einem Interferenz-Mehrschichtsystem versehen werden können. Erfindungsgemäß lassen sich die gewünschten Brechzahlen für jede Schicht durch Auswahl der Beschichtungszusammensetzungen gezielt einstellen, wobei die mindestens zwei Schichten unterschiedliche Brechungsindices aufweisen.

In der vorliegenden Beschreibung werden unter "nanoskaligen anorganischen. Feststoffteilchen" insbesondere solche mit einer mittleren Teilchengröße (einem mittleren Teilchendurchmesser (Volumenmittel)) von nicht mehr als 200 nm, vorzugsweise nicht mehr als 100 nm und insbesondere nicht mehr als 70 nm, z.B. 5 bis 100 nm, vorzugsweise 5 bis 70 nm verstanden. Ein besonders bevorzugter Teilchengrößenbereich liegt bei 5 bis 20 nm.

Die nanoskaligen anorganischen Feststoffteilchen können aus beliebigen Materialien bestehen, vorzugsweise bestehen sie jedoch aus Metallen und insbesondere aus Metallverbindungen wie beispielsweise (gegebenenfalls hydratisierten) Oxiden wie ZnO, CdO, SiO₂, TiO₂, ZrO₂, CeO₂, SnO₂, Al₂O₃, ln₂O₃, La₂O₃, Fe₂O₃, CU₂O, Ta₂O₅, Nb₂O₅, V₂O₅, MoO₃ oder WO₃, Chalkogeniden wie beispielsweise Sulfiden (z.B. CdS, ZnS, PbS und Ag₂S), Seleniden (z.B. GaSe, CdSe und ZnSe) und Telluriden (z.B. ZnTe oder CdTe), Halogeniden wie AgCl, AgBr, Agl, CuCl, CuBr, Cdl₂ und Pbl₂; Carbiden wie CdC₂ oder SiC; Arseniden wie AIAs, GaAs und GeAs; Antimoniden wie InSb; Nitriden wie BN, AIN, Si₃N₄ und Ti₃N₄; Phosphiden wie GaP, InP, Zn₃P₂ und Cd₃P₂; Phosphaten, Silikaten, Zirkonaten, Aluminaten, Stannaten und den entsprechenden Mischoxiden (z.B. Indium-Zinn-Oxiden (ITO) und solchen mit Perowskitstruktur wie BaTiO₃ und PbTiO₃).

Bevorzugt handelt es sich bei den im erfindungsgemäßen Verfahren eingesetzten nanoskaligen anorganischen Feststoffteilchen um (gegebenenfalls hydratisierte) Oxide, Sulfide, Selenide und Telluride von Metallen und Mischungen derselben. Erfindungsgemäß bevorzugt werden nanoskalige Teilchen von SiO₂, TiO₂, ZrO₂, ZnO, Ta₂O₅, SnO₂ und Al₂O₃ (in allen Modifikationen, insbesondere als Böhmit, AIO(OH)) sowie Mischungen derselben. Es hat sich herausgesteltt, dass SiO₂, und/oder TiO₂ als nanoskalige anorganische Feststoffteilchen für die Feststoffteilchen mit polymerisierbaren und/oder polykondensierbaren organischen Oberflächengruppen für die Folienbeschichtung besonders geeignete Beschichtungszusammensetzungen ergeben. Die nanoskaligen Teilchen enthalten auf den Oberflächen noch reaktionsfähige Gruppen, so befinden sich z.B. auf den Oberflächen von Oxid-Teilchen im allgemeinen Hydroxidgruppen.

Da die erfindungsgemäß einsetzbaren nanoskaligen Teilchen einen breiten Bereich von Brechzahlen abdecken, kann durch geeignete Auswahl dieser nanoskaligen. Teilchen die Brechzahl der Schicht(en) in bequemer Weise auf den gewünschten Wert eingestellt werden.

Die Herstellung der erfindungsgemäß eingesetzten nanoskaligen Feststoffteilchen kann auf übliche Weise erfolgen, z.B. durch Flammpyrolyse, Plasmaverfahren, Gasphasenkondensationsverfahren, Kolloidtechniken, Präzipitationsverfahren, Sol-Gel-Prozesse, kontrollierte Nukleations- und Wachstumsprozesse, MOCVD-Verfahren und (Mikro)emulsionsverfahren. Diese Verfahren sind in der Literatur ausführlich beschrieben. Insbesondere können z.B. Metalle (beispielsweise nach der Reduktion der Fällungsverfahren), keramische oxidische Systeme (durch Ausfällung aus Lösung), aber auch salzartige Systeme oder Mehrkomponentensysteme herangezogen werden. Zu den Mehrkomponentensystemen zählen auch Halbleitersysteme.

Es können auch im Handel erhältliche nanoskalige anorganische Feststoffteilchen verwendet werden. Beispiele für im Handel erhältliche nanoskalige SiO₂-Teilchen sind handelsübliche Kieselsäureprodukte, z.B. Kieselsole, wie die Levasile®, Kieselsole der Bayer AG, oder pyrogene Kieselsäuren, z.B. die Aerosil-Produkte von Degussa.

Die Herstellung der mit polymerisierbaren und/oder polykondensierbaren organischen Oberflächengruppen versehenen nanoskaligen anorganischen Feststoffteilchen, die erfindungsgemäß eingesetzt werden, kann prinzipiell auf zwei verschiedenen Wegen durchgeführt werden, nämlich zum einen durch Oberflächenmodifizierung von bereits hergesteillen nanoskaligen anorganischen Feststoffteilchen und zum anderen durch Herstellung dieser anorganischen nanoskaligen Feststoffteilchen unter Verwendung von einer oder mehreren Verbindungen, die über derartige polymerisierbare und/oder polykondensierbare Gruppierungen verfügen. Diese beiden Wege werden weiter unten und in den Beispielen näher erläutert

Bei den organischen polymerisierbaren und/oder polykondensierbaren Oberflächengruppen kann es sich um beliebige, dem Fachmann bekannte Gruppen handeln, die einer radikalischen, kationischen oder anionischen, thermischen oder photochemischen Polymerisation oder einer thermischen oder photochemischen Polykondensation zugänglich sind, wobei gegebenenfalls ein oder mehrere geeignete Initiatoren bzw. Katalysatoren zugegen sind. Der Ausdruck Polymerisation schließt hier auch die Polyaddition ein. Die für die jeweiligen Gruppen gegebenenfalls einsetzbaren Initiatoren bzw. Katalysatoren sind dem Fachmann bekannt Erfindungsgemäß bevorzugt werden Oberflächengruppen, die über eine (Meth)acryl-, Allyl-, Vinyl- oder Epoxygruppe verfügen, wobei (Meth)acryl- und Epoxygruppen besonders bevorzugt werden. Bei den polykondensationsfähigen Gruppen wären vor allem Hydroxy-, Carboxy- und Aminogruppen zu nennen, mit deren Hilfe Ether-, Ester- und Amidbindungen zwischen den nanoskaligen Teilchen erhalten werden können.

Wie bereits erwähnt, können die polymerisierbaren und/oder polykondensierbaren Oberflächengruppen prinzipiell auf zwei Wegen bereitgestellt werden. Wird eine Oberflächenmodifizierung bereits hergestellter nanoskaliger Teilchen durchgeführt, eignen sich zu diesem Zweck alle (vorzugsweise niedermolekularen) Verbindungen, die zum einen über eine oder mehrere Gruppen verfügen, die mit auf der Oberfläche der nanoskaligen Feststoffteilchen vorhandenen reaktionsfähigen Gruppen (wie beispielsweise OH-Gruppen im Falle von Oxiden) reagieren oder zumindest wechselwirken können, und zum anderen mindestens eine polymerisierbare und/oder polykondensierbare Gruppe aufweisen. Eine Oberflächenmodifizierung der nanoskaligen Teilchen kann z.B. durch Mischen der nanoskaligen Teilchen mit nachstehend erläuterten geeigneten Verbindungen gegebenenfalls in einem Lösungsmittel und unter Anwesenheit eines Katalysators erfolgen. Bei Silanen als Oberflächenmodifizierungsmittel genügt z.B. ein mehrstündiges Rühren mit den nanoskaligen Teilchen bei Raumtemperatur.

Somit können die entsprechenden Verbindungen z.B. sowohl kovalente als auch ionische (salzartige) oder koordinative (Komplex)-Bindungen zur Oberfläche der nanoskaligen Feststoffteilchen ausbilden, während unter den reinen Wechselwirkungen beispielhaft Dipol-Dipol-Wechselwirkungen, Wasseistoffbrückenbindungen und van der Waals-Wechselwirkungen zu nennen sind: Bevorzugt ist die Ausbildung von kovalenten und/oder koordinativen Bindungen.

Erfindungsgemäß bevorzugt ist es auch, dass die an den Oberflächen der nanoskaligen Teilchen vorhandenen organischen Gruppierungen, die die polymerisierbaren und/oder polykondensierbaren Gruppen umfassen, ein relativ niedriges Molekulargewicht aufweisen. Insbesondere sollte das Molekulargewicht der (rein organischen) Gruppierungen 600 und vorzugsweise 400, besonders bevorzugt 300, nicht übersteigen. Dies schließt selbstverständlich ein deutlich höheres Molekulargewicht der diese Gruppierungen umfassenden Verbindungen (Moleküle) nicht aus (z.B. bis zu 1.000 und mehr).

Beispiele für zur Oberflächenmodifizierung der nanoskaligen anorganischen Feststoffteilchen einsetzbare organische Verbindungen sind ungesättigte Carbonsäuren, β-Dicarbonyl-Verbindungen, z.B. β-Diketone oder β-Carbonylcarbonsäuren, mit polymerisierbaren Doppelbindungen, ethylenisch ungesättigte Alkohole und Amine, Aminosäuren, Epoxide und Diepoxide. Bevorzugt eingesetzte Verbindungen zur Oberflächenmodifizierung sind Diepoxide oder β-Diketone.

Konkrete Beispiele für organische Verbindungen zur Oberflächenmodifizierung sind Diepoxide wie 3,4-Epoxycyclohexylmethyl-3,4-epoxycyctohexancarboxylat, Bis-(3,4-epoxycyclohexyl)adipat, Cyclohexandimethanoldiglycidether, Neopentylglycoldiglycidether, 1,6-Hexandioldiglycidether, Propylenglycoldiglycidether, Bisphenol-A-diglycidether, Bisphenol-F-diglycidether, ungesättigte Carbonsäuren wie Acrylsäure und Methacrylsäure, und β-Diketone wie Acetylacetonat.

Weitere besonders bevorzugte Verbindungen zur Oberflächenmodifizierung der nanoskaligen anorganischen Feststoffteilchen sind, insbesondere bei oxidischen Teilchen, hydrolytisch kondensierbare Silane mit mindestens (und vorzugsweise) einem nicht hydrolysierbaren Rest, der über eine polymerisierbare und/oder polykondensierbare Gruppen verfügt, wobei es sich bevorzugt um eine polymerisierbare Kohlenstoff-Kohlenstoff-Doppelbindung oder eine Epoxygruppe handelt, insbesondere. (Meth)acrylsilane und Epoxysilane. Vorzugsweise weisen derartige Silane die allgemeine Formel (I) auf:

X-R¹-SiR²₃ (I)

worin X für CH₂=CR³-COO, CH₂=CH, Epoxy, Glycidyl oder Glycidyloxy steht, R³ Wasserstoff oder Methyl darstellt, R¹ ein zweiwertiger Kohlenwasserstoffrest mit 1 bis 10, vorzugsweise 1 bis 6 Kohlenstoffatomen ist, der gegebenenfalls eine oder mehrere Heteroatomgruppierungen (z.B. O, S, NH) enthält, die benachbarte Kohlenstoffatome voneinander trennen, und die Reste R², die gleich oder verschieden voneinander sind, aus Alkoxy-, Aryloxy-, Acyloxy- und Alkylcarbonyl-gruppen sowie Halogenatomen (insbesondere F, Cl und/oder Br) ausgewählt sind.

Die Gruppen R² können voneinander verschieden sein, sind aber bevorzugt identisch. Vorzugsweise sind die Gruppen R² ausgewählt aus Halogenatomen, C₁₋₄₋Alkoxygruppen (z.B. Methoxy, Ethoxy, n-Propoxy, i-Propoxy und Butoxy), C₆₋₁₀-Aryloxygruppen (z.B. Phenoxy), C₁₋₄-Acyloxygruppen (z.B. Acetoxy und Propionyloxy) und C₂₋₁₀-Alkylcarbonylgruppen (z.B. Acetyl). Besonders bevorzugte Reste R² sind C₁₋₄-Alkoxygruppen und insbesondere Methoxy und Ethoxy.

Beim Rest R¹ handelt es sich vorzugsweise um eine Alkylengruppe, insbesondere um eine solche mit 1 bis 6 Kohlenstoffatomen, wie z.B. Methylen, Ethylen, Propylen, Butylen und Hexylen. Wenn X für CH₂=CH steht, bedeutet R¹ vorzugsweise Methylen und kann in diesem Fall auch eine bloße Bindung bedeuten.

Vorzugsweise stellt X CH₂=CR³-COO (wobei R³ vorzugsweise CH₃ ist) oder Glycidyloxy dar. Dementsprechend sind besonders bevorzugte Silane der allgemeinen Formel (I) (Meth)acryloxyalkyltrialkoxysilane, wie z.B. 3-Methacryloxypropyltrimethoxysilan und 3-Methacryloxypropyltriethoxysilan, und Glycidyloxyalkyltrialkoxysilane, wie beispielsweise 3-Glycidyloxypropyltrimethoxysilan und 3-Glycidyloxypropyltriethoxysilan.

Erfolgt bereits die Herstellung der nanoskaligen anorganischen Feststoffteilchen unter Verwendung einer oder mehrerer Verbindungen, die über polymerisierbare und/oder polykondensierbare Gruppen verfügen, kann von einer nachträglichen Oberflächenmodifizierung abgesehen werden, obwohl diese selbstverständlich als zusätzliche Maßnahme möglich ist

Die in situ-Herstellung von nanoskaligen anorganischen Feststoffteilchen mit polymerisierbaren und/oder polykondensierbaren Oberflächengruppen wird im folgenden am Beispiel von SiO₂-Teilchen erläutert. Zu diesem Zweck können die SiO₂-Teilchen z.B. nach dem Sol-Gel-Verfahren unter Verwendung mindestens eines hydrolytisch polykondensierbaren Silans mit mindestens einer polymerisierbaren und/oder polykondensierbaren Gruppe hergestellt werden. Als derartige Silane eignen sich beispielsweise die oben beschriebenen Silane der allgemeinen Formel (I). Diese Silane werden entweder allein oder in Kombination mit einem geeigneten Silan der allgemeinen Formel (II)

SiR²₄ (II)

worin R² die oben angegebene Bedeutung aufweist, eingesetzt. Bevorzugte Silane der obigen allgemeinen Formel (II) sind Tetramethoxysilan und Tetraethoxysilan.

Selbstverständlich ist es auch möglich, zusätzlich oder alternativ zu den Silanen der allgemeinen Formel (II) andere hydrolysierbare Silane einzusetzen, z.B. solche, die über mindestens eine nicht-hydrolysierbare Kohlenwasserstoffgruppe ohne polymerisierbare und/oder polykondensierbare Gruppe verfügen, wie beispielsweise Methyl- oder Phenyltrialkoxysilane. Dabei kann es sich um Silane der Formel (III) handeln

R⁴ₙSIR²₄₋ₙ (III)

worin R² wie oben definiert ist, der nicht hydrolysierbare Rest R⁴ eine Alkylgruppe, vorzugsweise C₁₋₆-Alkyl, wie z.B. Methyl, Ethyl, n-Propyl, Isopropyl, n-Butyl, S-Butyl und t-Butyl, Pentyl oder Hexyl, eine Cycloalkylgruppe mit 5 bis 12 C-Atomen, wie Cyclohexyl, oder eine Arylgruppe, vorzugsweise C₆₋₁₀-Aryl, wie z.B. Phenyl und Naphthyl, ist und n 1, 2 oder 3, bevorzugt 1 oder 2 und insbesondere 1 ist. Der genannte Rest R⁴ kann gegebenenfalls einen oder mehrere übliche Substituenten, wie z.B. Halogen, Ether-, Phosphorsäure-, Sulfonsäure-, Cyano-, Amid-, Mercapto-, Thioether- oder Alkoxygruppen, aufweisen.

Im erfindungsgemäßen Verfahren wird eine Beschichtungszusammensetzung, die die vorstehend genannten nanoskaligen anorganischen Feststoffteilchen enthält, auf die Kunststofffolie oder auf eine bereits aufgebrachte Schicht aufgetragen. Bei der aufgetragenen Beschichtungszusammensetzung handelt es sich insbesondere um ein Beschichtungssol, d.h. eine Dispersion der vorstehend definierten nanoskaligen anorganischen Feststoffteilchen mit polymerisierbaren und/oder polykondensierbaren organischen Oberflächengruppen in einem Lösungsmittel bzw. einem Lösungsmittelgemisch. Die Beschichtungszusammensetzung ist beim Auftrag fließfähig.

Bei dem Lösungsmittel kann es sich um jedes dem Fachmann bekannte Lösungsmittel handeln. Das Lösungsmittel kann zum Beispiel Wasser und/oder ein organisches Lösungsmittel sein. Das organische Lösungsmittel ist vorzugsweise mit Wasser mischbar. Beispiele für geeignete organische Lösungsmittel sind Alkohole, Ether, Ketone, Ester, Amide und deren Mischungen. Bevorzugt werden Alkohole, z.B. aliphatische oder alicylische Alkohole, oder Mischungen von Alkoholen als Lösungsmittel eingesetzt, wobei einwertige Alkohole bevorzugt sind. Bevorzugt handelt es sich um lineare oder verzweigte einwertige Alkanole mit 1 bis 8, bevorzugt 1 bis 6 Kohlenstoffatomen. Besonders bevorzugte Alkohole sind Methanol, Ethanol, n-Propanol, 2-Propanol, n-Butanol, 2-Butanol, Isobutanol, tert.-Butanol oder Gemische davon.

Das Lösungsmittel oder ein Teil davon können sich auch im Zuge der Herstellung der nanoskaligen Teilchen oder der Oberflächenmödifizierung bilden. So werden z.B. bei der Herstellung von SiO₂-Teilchen aus Alkoxysilanen die entsprechenden Alkohole freigesetzt, die dann als Lösungsmittel fungieren können.

Es wurde überraschenderweise festgestellt, dass sich die Beschichtungssole für die erfindungsgemäße Beschichtung insbesondere dann eignen, wenn sie für den Auftrag hochverdünnt eingesetzt werden. Der Gesamtfeststoffgehalt des aufzutragenden Beschichtungssols beträgt insbesondere nicht mehr als 20 Gew.-%, bevorzugt nicht mehr als 15 Gew.-% und besonders bevorzugt nicht mehr als 7 Gew.-%. Zweckmäßigerweise beträgt der Gesamtfeststoffgehalt mindestens 0,5 Gew.-%, bevorzugt mindestens 1 Gew.-% und besonders bevorzugt mindestens 2,5 Gew.-%.

Sofern der Gesamtfeststoffgehalt des Beschichtungssols nicht mehr als 20 Gew.-% beträgt, können ausgezeichnete Beschichtungen auf den Kunststofffolien erhalten werden. Wenn das Beschichtungssol eine geringe Verdünnung (also einen relativ hohen Gesamtfeststoffgehalt) aufweist, sind große Nassfilmdicken der Beschichtungen nicht zu erreichen. Geeignete Nassfilmdicken des aufgetragenen Beschichtungssols liegen typischerweise im unteren µm-Bereich, z.B. bei 0,5 µm bis 20 µm.

Ein zusätzlicher Bestandteil des Beschichtungssols kann beispielsweise mindestens eine monomere oder oligomere Spezies sein, die über mindestens eine Gruppe verfügt, die mit den an der Oberfläche der nanoskaligen Teilchen vorhandenen polymerisierbaren und/oder polykondensierbaren Gruppen reagieren (polymerisieren bzw. polykondensieren) kann. Als derartige Spezies eignen sich z.B. Monomere mit einer polymerisierbaren Doppelbindung wie beispielsweise Acrylsäureester, Methacrylsäureester, Styrol, Vinylacetat und Vinylchlorid. Bevorzugte monomere Verbindungen mit mehr als einer polymerisierbaren Bindung sind insbesondere solche der allgemeinen Formel (IV):

(CH₂=CR³-COZ-)ₘ-A (IV)

worin
m = 2, 3 oder 4, vorzugsweise 2 oder 3 und insbesondere 2,
Z = O oder NH, vorzugsweise O,
R³= H, CH₃,
A = m-wertiger Kohlenwasserstoffrest mit 2 bis 30, insbesondere 2 bis 20 Kohlenstoffatomen, der eine oder mehrere Heteroatomgruppierungen aufweisen kann, die sich jeweils zwischen zwei benachbarten Kohlenstoffatomen befinden (Beispiele für derartige Heteroatomgruppierungen sind O, S, NH, NR (R = Kohlenwasserstoffrest), vorzugsweise O).

Weiter kann der Kohlenwasserstoffrest A einen oder mehrere Substituenten tragen, die vorzugsweise ausgewählt sind aus Halogen (insbesondere F, Cl und/oder Br), Alkoxy (insbesondere C₁₋₄-Alkoxy), Hydroxy, gegebenenfalls substituiertem Amino, NO₂, OCOR⁵, COR⁵ (R⁵ = C₁₋₆-Alkyl oder Phenyl). Vorzugsweise ist der Rest A jedoch unsubstituiert oder mit Halogen und/oder Hydroxy substituiert.

In einer Ausführungsform der vorliegenden Erfindung ist A von einem aliphatischen Diol, einem Alkylenglycol, einem Polyalkylenglycol oder einem gegebenenfalls alkoxylierten (z.B. ethoxylierten) Bisphenol (z.B. Bisphenol A) abgeleitet.

Weitere einsetzbare Verbindungen mit mehr als einer Doppelbindung sind z.B. Allyl(meth)acrylat, Divinylbenzol und Diallylphthalat. Ebenso kann z.B. eine Verbindung mit zwei oder mehr Epoxygruppen verwendet werden (im Fall der Verwendung von Epoxid-haltigen Oberflächengruppen), z.B. Bisphenol A-diglycidylether oder auch ein (oligomeres) Vorkondensat eines Epoxidgruppen-haltigen hydrolysierbaren Silans wie Glycidoxypropyltrimethoxysilan.

Der Anteil an organischen Komponenten in den erfindungsgemäß verwendeten Beschichtungssolen beträgt vorzugsweise nicht mehr als 20 Gewichtsprozent, z.B. 4 bis 15 Gew.-%, bezogen auf den Gesamtfeststoffgehalt. Für Schichten mit hoher Brechzahl kann er z.B. 5 Gewichtsprozent, für Schichten mit niedriger Brechzahl z.B. 15 Gewichtsprozent betragen. Bevorzugt werden aber keine derartigen organischen Komponenten eingesetzt.

Gegebenenfalls können dem Beschichtungssol auch weitere, für Folienbeschichtungen übliche Additive zugesetzt werden. Beispiele sind thermische oder photochemische Vernetzungsinitiatoren, Sensibilisierungsmittel, Netzhilfsmittel, Haftvermittler, Verlaufmittel, Antioxidationsmittel, Stabilisatoren, Vernetzungsmittel und Metallkolloide, z.B. als Träger optischer Funktionen. Neben den später erläuterten, gegebenenfalls einzusetzenden thermischen oder photochemischen Vemetzungsinitiatoren enthält das Beschichtungssol aber keine weiteren Komponenten, d.h. das Beschichtungssol bzw. die Beschichtungszusammensetzung besteht bevorzugt aus den nanoskaligen Feststoffteilchen mit polymerisierbaren und/oder polykondensierbaren organischen Oberflächengruppen, dem oder den Lösungsmitteln und gegebenenfalls einem oder mehreren thermischen oder photochemischen Vernetzungsinitiatoren.

Folien sind im Gegensatz zu sonstigen starren Substraten flexibel und erfordern daher spezielle Beschichtungstechniken und -zusammensetzungen. Bei der zu beschichtenden Kunststofffolie kann es sich um eine herkömmliche, in der Technik gebräuchliche Folie handeln, beispielsweise eine Folie von begrenzter Länge oder bevorzugt eine Endlosfolie (kontinuierliche Folie). Spezielle Beispiele sind Folien aus Polyethylen, z.B. HDPE oder LDPE, Polypropylen, Polyisobutylen, Polystyrol, Polyvinylchlorid, Polyvinylidenchlorid, Polytetrafluorethylen, Polychlortrifluorethylen, Poly(meth)acrylate, Polyamid, Polyethylenterephthalat, Polycarbonat, regenerierte Cellulose, Cellulosenitrat, Celluloseacetat, Cellulosetriacetat (TAC), Celluloseacetatbutyrat oder Kautschuk-Hydrochlorid. Die Kunststofffolie ist vorzugsweise transparent. Natürlich können auch Verbundfolien, z.B. aus den oben genannten Materialien, eingesetzt werden.

Die Kunststofffolie kann vorbehandelt sein. Sie kann z.B. vor der erfindungsgemäßen Beschichtung einer Coronabehandlung unterzogen werden oder mit einer Vorbeschichtung, z.B. zur Haftvermittlung, als Kratzfestbeschichtung oder als Antiglare-Beschichtung, versehen werden.

In Stufe a) des erfindungsgemäßen Verfahrens wird das Beschichtungssol mit einem Folienbeschichtungsverfahren auf die Kunststofffolie aufgebracht, um diese (auf einer Seite) ganz oder teilweise zu beschichten. Die Beschichtung erfolgt an einzelnen Folienstücken oder bevorzugt in einem kontinuierlichen Beschichtungsverfahren. Als Beschichtungsverfahren eignen sich die herkömmlichen und dem Fachmann bekannten Folienbeschichtungsverfahren. Beispiele hierfür sind Messer-Gießen (Rakelmesser-Streichverfahren), Beschichten mit Schlitzdüse, Kiss-Coating mit Spiralschaber, Meniskus-Beschichten, Walzenbeschichten oder Umkehrwalzenbeschichten (Reverse-Roll-Coating).

Für das erfindungsgemäße Verfahren hat sich das Umkehrwalzenbeschichten als besonders geeignet erwiesen. Bei diesem Verfahren wird das Beschichtungssol von einer Tauchwalze aufgenommen und über einen Meniskus-Beschichtungsschritt über eine Transferwalze auf eine Druckwalze (Masterwalze) übertragen. Bei geeignet hoher Präzision der Walzen und der Antriebe ist der Spalt zwischen beiden Walzen hinreichend konstant. Der auf der Druckwalze befindliche Nassfilm wird dann gewöhnlich vollständig auf die Substratfofie abgelegt. Dadurch wird die auf der Folie abgeschiedene Nassfilmdicke von möglichen Dickenschwankungen der Folie unabhängig. Durch Einsatz des Umkehrwalzenverfahrens lassen sich überraschenderweise besonders präzise und gleichmäßige Interferenz-Mehrschichtsysteme auf Kunststofffolien aufbringen, so dass der Einsatz dieses Verfahrens eine besonders bevorzugte Ausführungsform des erfindungsgemäßen Verfahrens darstellt.

Vor dem Aufbringen auf die Folie kann das Beschichtungssol zum Beispiel durch Zugabe von Lösungsmittel auf eine geeignete Viskosität bzw. auf einen geeigneten Feststoffgehalt eingestellt werden. Hierbei werden insbesondere die vorstehend aufgeführten hochverdünnten Beschichtungssole hergestellt. Nach dem Auftrag kann gegebenenfalls ein Trocknungsschritt erfolgen, insbesondere wenn die Vernetzung nicht über eine Wärmebehandlung durchgeführt wird.

In Stufe b) des erfindungsgemäßen Verfahrens erfolgt eine Vernetzung der polymerisierbaren und/oder polykondensierbaren Oberflächengruppen der nanoskaligen anorganischen Feststoffteilchen (gegebenenfalls über die polymerisierbaren und/oder polykondensierbaren Gruppen der zusätzlich eingesetzten monomeren oder oligomeren Spezies). Die Vernetzung kann mittels üblicher Polymerisations- und/oder Polykondensationsreaktionen auf die dem Fachmann geläufige Art und Weise durchgeführt werden.

Beispiele für geeignete Vernetzungsmethoden sind die thermische und photochemische (z.B. mit UV-Strahlung) Vernetzung, die Elektronenstrahl-Härtung, Laserhärtung oder Raumtemperaturhärtung. Gegebenenfalls erfolgt die Vernetzung in Anwesenheit eines geeigneten Katalysators bzw. Starters (Initiators), der dem Beschichtungssol spätestens unmittelbar vor Auftrag auf die Folie zugesetzt wird.

Als Initiator/Initiatorsysteme kommen alle geläufigen und dem Fachmann bekannten Starter/Startsysteme in Frage, einschließlich radikalischer Photostarter, radikalischer Thermostarter, kationischer Photostarter, kationischer Thermostarter und beliebiger Kombinationen derselben.

Konkrete Beispiele für einsetzbare radikalische Photostarter sind Irgacure® 184 (1-Hydroxycyclohexylphenylketon), Irgacure® 500 (1-Hydroxycyclohexylphenylketon, Benzophenon) und andere von der Firma Ciba-Geigy erhältliche Photoinitiatoren vom Irgacure®-Typ; Darocur® 1173, 1116, 1398, 1174 und 1020 (erhältlich von der Firma Ciba-Geigy); Benzophenon, 2-Chlorthioxanthon, 2-Methylthioxanthon, 2-Isopropylthioxanthon, Benzoin, 4,4'-Dimethoxybenzoin, Benzoinethylether, Benzoinisopropylether, Benzildimethylketal, 1,1,1-Trichloracetophenon, Diethoxyacetophenon und Dibenzosuberon.

Beispiele für radikalische Thermostarter sind u.a. organische Peroxide in Form von Diacylperoxiden, Peroxydicarbonaten, Alkylperestem, Alkylperoxiden, Perketalen, Ketonperoxiden und Alkylhydroperoxiden sowie Azo-Verbindungen. Als konkrete Beispiele wären hier insbesondere Dibenzoylperoxid, tert-Butylperbenzoat und Azobisisobutyronitril zu nennen. Bei Vorliegen von Epoxygruppen für die Vernetzung können Amingruppenhaltige Verbindungen als Thermostarter eingesetzt werden. Ein Beispiel ist Aminopropyltrimethoxysilan.

Ein Beispiel für einen kationischen Photostarter ist Cyracure® UVI-6974, während ein bevorzugter kationischer Thermostarter 1-Methylimidazol ist.

Diese Starter können in den üblichen, dem Fachmann bekannten Mengen, z.B. 0,01 bis 5 Gew.-%, insbesondere 0,1 bis 2 Gew.-%, bezogen auf den Gesamt-Feststoffgehalt des Beschichtungssols eingesetzt werden. Selbstverständlich kann je nach Fall unter Umständen ganz auf den Starter verzichtet werden.

Die Vernetzung in Stufe b) des erfindungsgemäßen Verfahrens erfolgt vorzugsweise thermisch oder durch Bestrahlung (insbesondere mit UV-Licht). Es können herkömmliche Lichtquellen für eine Photopolymerisation verwendet werden, insbesondere UV-Licht emittierende Quellen, z.B. Quecksilberdampflampen, Xenonlampen und Laserlicht. Bei Vernetzung über eine Wärmebehandlung hängt der geeignete Temperaturbereich naturgemäß insbesondere von den vorliegenden polymerisierbaren und/oder polykondensierbaren Oberflächengruppen der nanoskaligen anorganischen Feststoffteilchen, den gegebenenfalls eingesetzten Initiatoren, dem Verdünnungsgrad und der Dauer der Behandlung ab.

In der Regel erfolgt die Wärmebehandlung zur Vernetzung aber in einem Temperaturbereich von 80°C bis 200°C und bevorzugt 100°C bis 140°C. Die Dauer der Behandlung kann z.B. 30 s bis 5 min, bevorzugt 1 min bis 2 min betragen. Der Schritt b) wird so ausgeführt, dass über die polymerisierbaren und/oder polykondensierbaren Oberflächengruppen zumindest teilweise eine Vernetzung erfolgt ist, es können auch im wesentlichen alle bzw. alle polymerisierbaren und/oder polykondensierbaren Oberflächengruppen für die Vernetzung bei diesem Schritt abreagieren.

Bei der Wärmebehandlung können vor, während oder nach der Vernetzung, in der Regel gleichzeitig mit der Vernetzung, weitere flüchtige Bestandteile, insbesondere das Lösungsmittel, aus der Beschichtungszusammensetzung verdampfen. Sofern zur Vernetzung keine Wärmebehandlung durchgeführt wird, kann eine Wärmebehandlung (zur Trocknung) im Anschluss an die Vernetzung ausgeführt werden.

Die Auftragmenge der Beschichtungszusammensetzung wird in Abhängigkeit von der gewünschten Brechzahl und dem Anwendungsbereich im allgemeinen so gewählt wird, dass Trockenschichtdicken im Bereich von 50 bis 200 nm, vorzugsweise 100 bis 150 nm, erzielt werden.

Auf die gebildete, zumindest teilweise organisch vernetzte Schicht werden gemäß den Schritten c) und d) und gegebenenfalls e) in zu den Schritten a) und b) analoger Weise eine oder mehrere weitere Schichten aufgebracht, bis der gewünschte Schichtverbund erhalten wird. Bei der letzten (obersten) Schicht ist eine separate Vemetzungsstufe gemäß b) bzw. d) nicht mehr unbedingt erforderlich, sondern diese kann, falls gewünscht, direkt gemeinsam mit der gegebenenfalls durchgeführten abschließenden Wärmebehandlungsstufe f) zur Nachbehandlung des Schichtverbunds erfolgen.

Der Schichtverbund wird gegebenenfalls in der Stufe f) wärmebehandelt. Es ist bevorzugt, diese Wärmebehandlung des Schichtverbunds durchzuführen. Durch die Wärmebehandlung ergibt sich eine härtere Beschichtung. Die Wärmebehandlung hängt naturgemäß von der Folie und der Zusammensetzung der Schichten ab. In der Regel erfolgt die abschließende Wärmebehandlung aber bei Temperaturen im Bereich von 80 bis 200°C, vorzugsweise 100 bis 160°C und insbesondere 110 bis 130°C. Die Dauer der Wärmebehandlung beträgt beispielsweise 10 min bis 2 h, bevorzugt 30 min bis 1 h. Es werden Interferenz-Mehrschichtsysteme auf Kunststofffolie ohne Rissbildung oder andere Defekte erhalten.

Die abschließende Wärmebehandlung des Schichtverbunds kann in den Schichten bzw. dem Schichtverbund z.B. zu einer weitgehenden Vervollständigung der organischen Vernetzung führen oder gegebenenfalls noch vorhandene Lösungsmittelreste entfernen. Bei der Wärmebehandlung kommt es vermutlich auch zu Kondensationreaktionen zwischen den auf der Oberfläche der Feststoffteilchen noch befindlichen reaktiven Gruppen (z.B. (Si)-OH-Gruppen auf SiO₂-Teilchen) kommen, so dass die Feststoffteilchen in den Schichten neben den oben erläuterten organischen Vernetzungen über anorganische Kondensationsreaktionen miteinander verknüpft werden.

Nach einer besonders bevorzugten Ausführungsform besteht die Möglichkeit, die Beschichtungszusammensetzungen so auszuwählen, dass bei der fertigen Kunststofffolie mit Interferenz-Mehrschichtsystem im Bereich zwischen 400 nm und 650 nm Wellenlänge Restreflexwerte unter 0,5 % und bei 550 nm Wellenlänge Restreflexwerte unter 0,3 % erzielt werden.

Je nach Endanwendung können sich weitere Behandlungsschritte anschließen. Die beschichtete Folie kann z.B. auf der Seite, die der Seite mit dem Mehrschichtsystem gegenüberliegt, mit einer Klebschicht und gegebenenfalls einer Deckschicht versehen werden. Die Klebschicht kann z.B. zum Auflaminieren auf ein Substrat dienen. Eine Endlosfolie kann zurechtgeschnitten werden, um zu einer für die Endanwendung geeigneten Abmessung zu gelangen.

Die erfindungsgemäße Kunststofffolie mit darauf aufgebrachtem Interferenz-Mehrschichtsystem eignet sich insbesondere als optische Laminierfolie, z.B: auf Folien und starren Substraten. Dementsprechend ist Gegenstand der Erfindung auch ein Verbundmaterial aus einem Substrat, dass vorzugsweise starr ist, bevorzugt aus Glas oder Kunststoff besteht und/oder vorzugsweise transparent ist, auf das die erfindungsgemäße Kunststofffolie auflaminiert ist. Natürlich kann das Substrat auch auf beiden Seiten mit einer optischen Laminierfolie versehen werden.

Geeignete Laminierungsverfahren sind dem Fachmann bekannt und es können alle üblichen Laminierungsverfahren angewandt werden. Beispielsweise erfolgt die Verbindung über eine Klebschicht, die auf der Folie, dem Substrat oder beiden aufgetragen werden kann.

Die erfindungsgemäß hergestellten Kunststofffolien mit Interferenz-Mehrschichtsystem oder die entsprechenden Verbundmaterialien eignen sich z.B. als Antireflexsysteme, insbesondere zur Entspiegelung, als Reflexionssysteme, Reflexfilter und Farbfilter für Beleuchtungszwecke oder für dekorative Zwecke.

Konkrete Anwendungsgebiete für die erfindungsgemäß hergestellten Kunststofffolien mit Interferenz Mehrschichtsystem und die entsprechenden Verbundmaterialien sind z.B.:
- Antireflexsysteme bzw. -beschichtungen für das sichtbare Licht im Bereich Architektur, z.B. Scheiben bzw. Fenster in Bauwerken, für Vitrinen- und Bilderverglasung, für Gewächshäuser, für Scheiben im Inneren von Fahrzeugen, z.B. Automobilen, LKW, Motorrädern, Schiffen und Flugzeugen,
- beschichtete Folien als Rollo mit optischer bzw. dekorativer Wirkung, Laminieren auf nicht-transparente Substrate für dekorative Zwecke,
- NIR-Reflexfilter (NIR = Nahes Infrarot),
- Entspiegelung (NIR, Vis), z.B. für photovoltaische und andere optische Anwendungen (Solarzellen, Solarkollektoren),
- Farbfilter zur Beleuchtung oder für dekorative Zwecke,
- IR-Reflexionsschicht für Brand- und Hitzeschutzanwendungen,
- UV-Reflexfolie und
- Laserspiegel.

Das folgende Beispiel dient der weiteren Erläuterung der Erfindung und hat keinen beschränkenden Charakter.

### Beispiel - Herstellung einer 3-fach Entspiegelungsschicht

### 1. Synthese der Beschichtungssole

Die Antireflex-Beschichtungssole M, H, L (M: Sol für Schicht mit mittlerer Brechzahl, H: Sol für Schicht mit hoher Brechzahl, L: Sol für Schicht mit niedriger Brechzahl) wurden aus drei Grundsolen (H, Lr, Lo) hergestellt.

### 1.1. Synthese der Grundsole (Raumtemperatur)

### a) Grundsol H

Zu einer Mischung von 400 g 2-Propanol und 400 g 1-Butanol wurden 12,12 g HCl (16,9%) gegeben. Zum Lösungsmittelgemisch wurden unter Rühren 79,61 g Titanisopropylat gegeben. Nach 24 h Rühren ist die Synthese abgeschlossen.

### b) Grundsol Lr

105,15 g Tetraethoxysilan wurden in 60 g Ethanol gelöst. Daneben wurde eine Lösung aus 41,5 g HCl (0,69 %) und 60 g Ethanol hergestellt und der Tetraethoxysilan-Ethanol-Mischung unter Rühren-zugefügt Nach einer Reaktionszeit von 2 h wurde das Sol mit 500 g 2-Propanol und 500 g 1-Butanol verdünnt.

### c) Grundsol Lo

360,8 g Tetramethoxysilan wurden in 319,2 g Ethanol gelöst. Daneben wurde eine Lösung aus 6,9 g HCl (37 %), 362,5 g Wasser und 319,2 g Butanol hergestellt. Diese wurde der Tetramethoxysilan-Ethanol-Mischung unter Rühren zugefügt. Nach 2 h Rühren ist die Synthese abgeschlossen.

### 1.2. Herstellung der Beschichtungssole (ca. 1 1 Sol)

### a) Sol M

76,8 g des Grundsols Lr wurden mit 419,2 g Grundsol H gemischt. Zu dieser Mischung wurden 2,976 g 1,4-Cyclohexanedimethanoldiglycidylether (CHMG) unter Rühren zugetropft. Das Sol wurde mit 321,6 g 1-Butanol verdünnt.

### b) Sol H

Zu 480 g Grundsol H wurden 1,2 g 1,4-Cyclohexanedimethanoldiglycidylether (CHMG) unter Rühren tropfenweise zugefügt Das Sol wurde mit 321,6 g 1-Butanol verdünnt.

### c) Sol L

201,6 g Grundsol Lo wurden mit 624 g 1-Butanol verdünnt Zu dieser Mischung wurden 1,44 g vorhydrolysiertes Glycidyloxypropyltrimethoxysilan (Hydrolyse mit 0,1 n HCl (0,5 Mol /Mol OR), anschließend wurde das Lösungsmittel abrotiert). Zu dieser Mischung wurden noch 0,072 g Aminopropyltrimethoxysilan als Thermostarter zugegeben.

### 2. Beschichtung der Kunststofffolie

Als Kunststofffolie wurde eine Triacetatcellulose (TAC)-Folie mit einer Dicke von 50 µm und Kratzfestbeschichtung verwendet. Die vorstehend aufgeführten Beschichtungssole M, H und L wurden nacheinander mit Hilfe einer Umkehr-Waben-Beschichtungsanlage (Typ BA 12300, Wemer Mathis AG, Schweiz) auf die Kunststofffolie aufgebracht. Die Folienspannung betrug für alle 3 Beschichtungen 60 N. Die Vorvernetzung aller drei aufgebrachten Beschichtungen erfolgte über einen Zeitraum von 2 min bei einer Ofentemperatur von 120 °C. Zur Nachbehandlung wurde der aufgebrachte Schichtverbund als Rolle in einem vorgeheizten Ofen 30 min bei 120 °C behandelt, entnommen und auf Raumtemperatur abgekühlt. Es ergab sich ein fehlerfreies Interferenz-Mehrschichtsystem auf der Kunststofffolie mit dem gewünschten Interferenzverhalten.

Für den Auftrag der 3 Schichten wurden folgende Beschichtungsparameter für den Umkehrwalzenbeschichter eingestellt:

| Sol | Walze | Drehung | Geschw. (m/min) | Spalt (µm) |
|---|---|---|---|---|
| M | Tauchwalze | links | 1,0 | |
| | Transferwalze | links | 1,0 | zwischen Tauch- u. Transferwalze =100 |
| | Masterwalze | rechts | 1,0 | zwischen Transfer- u. Masterwalze = 100 |
| H | Tauchwalze | links | 1,0 | |
| | Transferwalze | links | 1,0 | zwischen Tauch- u. Transferwalze = 150 |
| | Masterwalze | rechts | 1,0 | zwischen Transfer- u. Masterwalze =100 |
| L | Tauchwalze | links | 1,0 | |
| | Transferwalze | links | 1,0 | zwischen Tauch- u. Transferwalze = 100 |
| | Masterwalze | rechts | 1,0 | zwischen Transfer- u. Masterwalze = 100 |

## Patentansprüche

1. Kunststofffolie mit einem darauf aufgebrachten Interferenz-Mehrschichtsystem umfassend mindestens zwei Schichten mit unterschiedlichen Brechungsindices, die jeweils erhältlich sind durch Vernetzung einer Beschichtungszusammensetzung, die nanoskalige anorganische Feststoffteilchen mit polymerisierbaren und/oder polykondensierbaren organischen Oberflächengruppen enthält, unter Bildung einer über die polymerisierbaren und/oder polykondensierbaren organischen Oberflächengruppen vernetzten Schicht.

2. Kunststofffolie nach Anspruch 1, **dadurch gekennzeichnet, dass** die nanoskaligen Feststoffteilchen aus SiO₂ und/oder TiO₂ ausgewählt sind.

3. Kunststofffolie nach Anspruch 1 oder 2, **dadurch gekennzeichnet, dass** die polymerisierbaren und/oder polykondensierbaren Oberflächengruppen ausgewählt sind aus organischen Resten, die über eine Acryl-, Methacryl-, Vinyl-, Allyl- oder Epoxygruppe verfügen.

4. Kunststofffolie nach einem der Ansprüche 1 bis 3, **dadurch gekennzeichnet, dass** die mindestens zwei aufgebrachten Schichten einer gemeinsamen Wärmebehandlung unterworfen worden sind.

5. Verbundmaterial umfassend ein Substrat, insbesondere ein Glas- oder Kunststoffsubstrat, und eine darauf auflaminierte Kunststofffolie nach einem der Ansprüche 1 bis 4.

6. Verfahren zur Herstellung einer Kunststofffolie mit Interferenz-Mehrschichtsystem mit mindestens zwei Schichten mit unterschiedlichen Brechungsindices, das folgende Stufen umfaßt:
a) Aufbringen eines Beschichtungssols, das nanoskalige anorganische Feststoffteilchen mit polymerisierbaren und/oder polykondensierbaren organischen Oberflächengruppen enthält, auf die Kunststofffolie,
b) Vernetzung der polymerisierbaren und/oder polykondensierbaren organischen Oberflächengruppen der Feststoffteilchen unter Bildung einer zumindest teilweise organisch vernetzten Schicht,
c) Aufbringen eines weiteren Beschichtungssols, das nanoskalige anorganische Feststoffteilchen mit polymerisierbaren und/oder polykondensierbaren organischen Oberflächengruppen enthält und einen anderen Brechungsindex als das vorangehende Beschichtungssol ergibt, auf die zumindest teilweise organisch vernetzte Schicht,
d) Vernetzung der polymerisierbaren und/oder polykondensierbaren organischen Oberflächengruppen der Feststoffteilchen unter Bildung einer wieteren, zumindest teilweise organisch vernetzten Schicht,
e) gegebenenfalls ein- oder mehrmaliges Wiederholen der Schritte c) und d) unter Bildung weiterer zumindest teilweise organisch vernetzter Schichten, und
f) gegebenenfalls Wärmebehandlung des Schichtverbunds, wobei dieser Schritt zusammen mit dem Schritt d) für die oberste Schicht ausgeführt werden kann.

7. Verfahren nach Anspruch 6, **dadurch gekennzeichnet, dass** eine Wärmebehandlung des Schichtverbunds gemäß Schritt f) durchgeführt wird.

8. Verfahren nach Anspruch 6 oder Anspruch 7, **dadurch gekennzeichnet, dass** ein Beschichtungssol mit einem Gesamtfeststoffgehalt von nicht mehr als 20 Gew.-%, vorzugsweise nicht mehr als 15 Gew.-%, aufgebracht wird.

9. Verfahren nach irgendeinem der Ansprüche 6 bis 8, **dadurch gekennzeichnet, dass** die Bildung der zumindest teilweise organisch vernetzten Schicht(en) bei Temperaturen im Bereich von 80°C bis 200°C durchgeführt wird.

10. Verfahren nach irgendeinem der Ansprüche 6 bis 9, **dadurch gekennzeichnet, dass** die Wärmebehandlung des Schichtverbunds bei Temperaturen im Bereich von 80°C bis 100°C durchgeführt wird.

11. Verfahren nach irgendeinem der Ansprüche 6 bis 10, **dadurch gekennzeichnet, dass** die Schichten durch Umkehrwalzenbeschichtung aufgebracht werden.

12. Verwendung einer Kunststofffolie nach Anspruch 1 oder eines Verbundmaterials nach Anspruch 5 als Antireflexsystem, Reflexsystem, Reflexfilter oder Farbfilter.

## Claims

1. A polymer film coated with a multilayer optical interference system comprising at least two layers having different refractive indices and each obtainable by crosslinking a coating composition comprising nanoscale inorganic solid particles having polymerizable and/or polycondensable organic surface groups to form a layer which is crosslinked by way of the polymerizable and/or polycondensable organic surface groups.

2. The polymer film as claimed in claim 1, **characterized in that** the nanoscale solid particles are selected from SiO₂ and/or TiO₂.

3. The polymer film as claimed in claim 1 or 2, **characterized in that** the polymerizable and/or polycondensable surface groups are selected from organic radicals which possess an acryloyl, methacryloyl, vinyl, allyl or epoxy group.

4. The polymer film as claimed in any one of claims 1 to 3, **characterized in that** the at least two applied layers have been subjected to a common heat treatment.

5. A composite material comprising a substrate, in particular a glass or plastics substrate, and, laminated thereon, a polymer film as claimed in any one of claims 1 to 4.

6. A process for producing a polymer film coated with a multilayer interference system having at least two layers having different refractive indices, which comprises the following steps:
a) applying a coating sol comprising nanoscale inorganic solid particles having polymerizable and/or polycondensable organic surface groups to the polymer film,
b) crosslinking the polymerizable and/or polycondensable organic surface groups of the solid particles, to form an at least partly organically crosslinked layer,
c) applying to the at least partly organically crosslinked layer a further coating sol comprising nanoscale inorganic solid particles having polymerizable and/or polycondensable organic surface groups and a different refractive index to the preceding coating sol,
d) crosslinking the polymerizable and/or polycondensable organic surface groups of the solid particles to form a further layer,
e) if desired, repeating steps c) and d) one or more times to form, at least partly organically crosslinked layers,
and
f) if desired, heat-treating the layer assembly, it being possible to perform this step together with step d) for the topmost layer.

7. The process as claimed in claim 6, **characterized in that** a heat treatment of the layer assembly according to step f) is carried out.

8. The process as claimed in claim 6 or claim 7, **characterized in that** a coating sol having a total solids content of not more than 20% by weight, preferably not more that 15% by weight, is applied.

9. The process as claimed in any one of claims 6 to 8, **characterized in that** the formation of the at least partly organically crosslinked layer(s) is conducted at temperatures in the range from 80°C to 200°C.

10. The process as claimed in any one of claims 6 to 9, **characterized in that** the heat treatment of the layer assembly is conducted at temperatures in the range from 80 to 100°C.

11. The process as claimed in any one of claims 6 to 10, **characterized in that** the layers are applied by reverse-roll coating.

12. The use of a polymer film as claimed in claim 1 or of a composite material as claimed in claim 5 as an antireflection system, reflection system, reflection filter or color filter.

## Revendications

1. Feuille de matière plastique portant, disposé sur elle, un système multicouche interférentiel, comprenant au moins deux couches ayant des indices de réfraction différents, qui peuvent être obtenues chacune par réticulation d'une composition de revêtement contenant des particules solides minérales de l'ordre de grandeur du nanomètre, portant des groupes superficiels organiques polymérisables et/ou polycondensables, par formation d'une couche réticulée par l'intermédiaire des groupes superficiels organiques polymérisables et/ou polycondensables.

2. Feuille de matière plastique selon la revendication 1, **caractérisée en ce que** les particules solides de l'ordre de grandeur du nanomètre sont des particules de SiO₂ et/ou des particules de TiO₂.

3. Feuille de matière plastique selon la revendication 1 ou 2, **caractérisée en ce que** les groupes superficiels polymérisables et/ou polycondensables sont choisis parmi des restes organiques qui présentent un groupe acrylyle, méthacrylyle, vinyle, allyle ou époxy.

4. Feuille de matière plastique selon l'une quelconque des revendications 1 à 3, **caractérisée en ce que** les au moins deux feuilles disposées ont été soumises à un traitement thermique commun.

5. Matériau composite comprenant un support, en particulier un support en verre ou en matière plastique, et une feuille de matière plastique selon l'une quelconque des revendications 1 à 4, appliquée dessus par stratification.

6. Procédé de préparation d'une feuille de matière plastique munie d'un système multicouche interférentiel comportant au moins deux couches ayant des indices de réfraction différents, qui comprend les étapes suivantes :
a) l'application sur la feuille de matière plastique d'un sol pour revêtement, qui contient des particules solides minérales de l'ordre de grandeur du nanomètre, portant des groupes superficiels organiques polymérisables et/ou polycondensables,
b) la réticulation des groupes superficiels organiques polymérisables et/ou polycondensables des particules solides avec formation d'une couche réticulée, au moins partiellement organique,
c) l'application sur la couche réticulée, au moins partiellement organique, d'un autre sol pour revêtement, contenant des particules solides minérales de l'ordre de grandeur du nanomètre, portant des groupes superficiels organiques polymérisables et/ou polycondensables, et présentant un indice de réfraction différent de celui du sol pour revêtement précédent,
d) la réticulation des groupes superficiels organiques polymérisables et/ou polycondensables des particules solides, avec formation d'une autre couche réticulée, au moins partiellement organique,
e) éventuellement une ou plusieurs répétitions des étapes c) et d) avec formation d'autres couches réticulées, au moins partiellement organiques, et
f) éventuellement un traitement thermique du composite stratifié, cette étape pouvant être réalisée en même temps que l'étape d) pour la couche supérieure.

7. Procédé selon la revendication 6, **caractérisé en ce que** l'on effectue un traitement thermique du composite stratifié conformément à l'étape f).

8. Procédé selon la revendication 6 ou 7, **caractérisé en ce que** l'on applique un sol pour revêtement ayant une teneur totale en matières solides qui ne dépasse pas 20 % en poids et de préférence 15 % en poids.

9. Procédé selon l'une quelconque des revendications 6 à 8, **caractérisé en ce que** l'on effectue la formation de la couche ou des couches réticulées, au moins partiellement organiques, en opérant à des températures comprises dans l'intervalle allant de 80 °C à 200 °C.

10. Procédé selon l'une quelconque des revendications 6 à 9, **caractérisé en ce que** l'on effectue le traitement thermique du composite stratifié à des températures comprises dans l'intervalle allant de 80 °C à 100 °C.

11. Procédé selon l'une quelconque des revendications 6 à 10, **caractérisé en ce que** l'on applique les couches par un procédé d'enduction à rouleaux inversés.

12. Utilisation d'une feuille de matière plastique selon la revendication 1 ou d'un matériau composite selon la revendication 5, comme système antireflets, système à réflexion, filtre à réflexion ou filtre coloré.
